# FASCICULE DE BREVET EUROPEEN

(11) **EP 2 779 488 B1**
(45) Date de publication et mention de la délivrance du brevet: **16.11.2016**
(21) Numéro de dépôt: 13305276.1
(22) Date de dépôt: 12.03.2013
(51) Int. Cl.: H04B 17/00

(54) **Test de la communication sans fil dans une installation domotique**
Test des drahtlosen Kommunikationsverfahrens in einer Heimanlage
Testing wireless communication in a home-automation installation

(43) Date de publication de la demande: 17.09.2014
(73) Titulaire: HAGER CONTROLS (Société par Actions Simplifiée), 67700 Saverne (FR)
(72) Inventeur: van Landeghem, Nicolas, 67000 Strasbourg (FR)
(74) Mandataire: Nuss, Laurent

(56) Documents cités:
- WO-A1-2008/058268
- FR-A1- 2 903 213
- US-A- 5 373 548
- 2gig Technologies: "Wireless Security System - Installation and Programming Instructions", , 2 mai 2011 (2011-05-02), XP055065378, Extrait de l'Internet: URL:http://www.protectron.com/images/stori es/manuals/gocontrol/go_control_programing _and_installation_manual.pdf [extrait le 2013-06-05]

## Description

La présente invention relève du domaine des installations domotiques qui communiquent sans fil, et a pour objet, d'une part, un procédé de test, et, d'autre part, un dispositif de communication particuliers.

Une installation domotique comprend en effet un ensemble d'appareils destinés à communiquer sans fil, pour notamment l'émission et/ou la réception d'instruction, d'information d'état, ou autres. Dans la pratique, lors de la mise en place de l'installation domotique sans fil, l'installateur configure chaque appareil en y mémorisant, pour chacun, une liste des appareils avec lesquels il est destiné à échanger de l'information.

Comme chaque appareil a une certaine portée, il est possible qu'ils soient positionnés trop éloignés les uns des autres pour que la communication sans fil puisse s'établir, ou encore que des obstacles, permanents ou temporaires, modifient la portée de la transmission sans fil. Une des solutions à ce type de situations est alors de rajouter un répéteur, qui peut alors venir en complément des éventuels autres répéteurs que forment généralement les différents moyens de réception. Toutefois, le recours à des répéteurs, qu'ils soient des moyens de réception déjà présents dans l'installation ou qu'ils soient rajoutés spécifiquement, présente l'inconvénient de rajouter un coût matériel, mais surtout de ralentir la communication. En outre, la nécessité de recourir à des répéteurs n'est souvent détectable qu'en exploitation, alors que l'étape d'installation est terminée. Il serait en effet bien plus efficace de positionner dès le début les appareils à des distances réciproques qui leur permettent de communiquer directement, ou au moins de limiter autant que possible le nombre de répéteurs.

Le document 2gig Technologies : "Wireless Security System - Installation and Programming Instructions" divulgue un procédé de test permettant de vérifier que des messages envoyés par des capteurs à un panneau de commande sont bien reçus par ce dernier. A l'aide de ce procédé, un utilisateur peut déterminer la puissance des signaux radio reçus par le panneau de contrôle, la puissance des signaux étant affichée sur un écran du panneau de contrôle.

Le document FR 2 903 213 A1 divulgue un procédé de communication par radio fréquence dans une installation domotique. Le procédé consiste essentiellement à mesurer le niveau de puissance de signaux reçus par un récepteur et de comparer le niveau de puissance mesurée à un seuil prédéterminé. Le procédé sert ainsi à déterminer si le signal reçu est destiné au récepteur ou non.

Le document WO 2008/058 268 divulgue un procédé de communication dans un réseau sans fil. Dans ce procédé, la puissance du signal ainsi que d'autres paramètres du signal reçu par un récepteur sont déterminés et comparés à un seuil. A l'aide de ces paramètres, le procédé propose d'évaluer la qualité de la communication dans le réseau sans fil.

Le document US 5,373,548 divulgue un procédé de communication d'un téléphone sans fil. A l'aide de ce procédé, un utilisateur de ce téléphone sans fil est averti lorsqu'il se trouve au-delà de la portée du téléphone sans fil.

C'est donc bien lors du positionnement des appareils que l'installateur devrait pouvoir s'assurer de leur capacité à communiquer, dans le but soit d'en déplacer l'un ou l'autre, soit d'identifier le besoin de passer par un répéteur. En outre, il doit être simple et immédiat pour l'installateur de savoir si les produits qu'il est en train de placer seront effectivement aptes à communiquer entre eux. Enfin, l'évaluation de la communication entre les appareils ne devrait pas modifier leur comportement lorsque l'installation domotique fonctionne normalement.

La présente invention a pour but d'atteindre au moins une partie et préférentiellement tous les objectifs cités ci-dessus et vise ainsi à proposer un procédé de test de communication dans lequel les appareils, pendant une phase de test, rendent compte, de façon exploitable par l'installateur, de la bonne circulation entre eux d'un signal.

A cet effet, l'invention a pour objet un procédé de test de la réception sans fil d'un moyen de communication, ledit moyen étant au moins apte à recevoir sans fil un signal. Ce procédé de test comprend une étape, mise en oeuvre par le moyen de communication, consistant essentiellement à rendre compte de ce que reçoit sans fil ledit moyen,
la mise en oeuvre de l'étape consistant à rendre compte étant fonction de la réception sans fil par le moyen de communication, à savoir la réception ou non d'un signal, voire des informations que contient un signal reçu, le procédé étant caractérisé en ce qu'il comprend en outre l'étape suivante :
l'analyse d'un signal reçu par le moyen de communication comprend la détection de son type, à savoir un signal de type test, de sorte à, selon le type de signal reçu, soit en extraire les informations qui permettent au moyen de communication de moduler le compte rendu, soit de traiter le signal reçu comme un signal vehiculé normalement en fonctionnement, c'est-à-dire un signal de mesure, d'instructions ou autres.
la mise en oeuvre de l'étape consistant à rendre compte étant fonction du type de signal reçu, identifié lors de son analyse.

L'invention a aussi pour objet un dispositif de communication sans fil, comprenant au moins un moyen de communication apte à recevoir un signal sans fil et à rendre compte de ce qu'il reçoit, ce dispositif étant apte à mettre en oeuvre un tel procédé.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

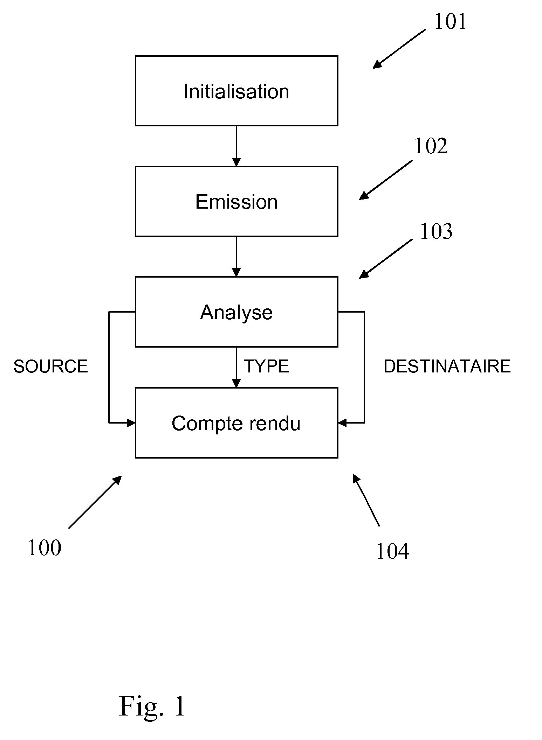

- la figure 1 illustre schématiquement le procédé, et
- la figure 2 illustre l'interaction entre un moyen de communication et un moyen d'émission.

L'invention a donc tout d'abord pour objet un procédé de test 100 de la réception sans fil d'un moyen de communication 1, ledit moyen étant au moins apte à recevoir sans fil un signal. Dans la pratique, un moyen de communication 1 apte à recevoir un signal sans fil est généralement aussi apte à émettre un signal sans fil. Néanmoins, comme il apparaîtra au fil de la description ci-dessous, il suffit que le moyen de communication 1 soit apte à recevoir sans fil un signal.

Un moyen de communication 1 peut ainsi prendre la forme d'un répéteur, d'un appareil domotique particulier, d'un module monté sur un rail dans un coffret de brassage, d'un appareillage électrique monté dans une boîte encastrée ou en saillie, voire d'un appareil mobile, etc. Le moyen de communication 1 comprend donc un composant récepteur RF, ainsi que d'autres éventuels composants.

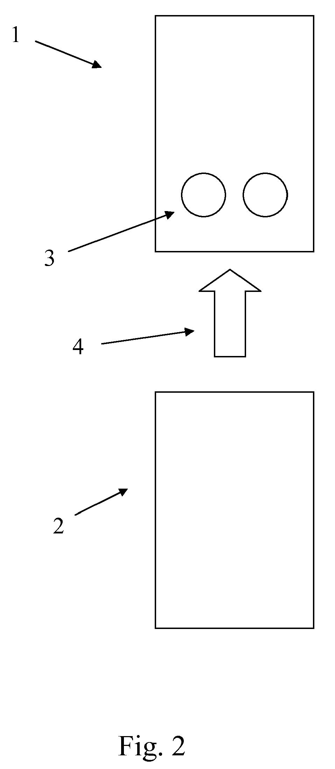

Le moyen de communication 1 présente des moyens lui permettant de rendre compte de l'éventuelle réception de signal, voir en particulier le moyen d'indication lumineuse 3 de la figure 2. Il s'agit préférentiellement de moyens présents sur le moyen de communication 1 lui-même, comme au moins une diode, un buzzer, ou autres. Mais de façon générale, il peut s'agir aussi de moyens pour signaler à distance, par exemple en émettant à nouveau un signal codé, cette fois-ci avec ou sans fil, à destination par exemple d'une centrale domotique qui assurera, entre autres, l'affichage d'une information correspondante.

Selon l'invention, le procédé comprend une étape, mise en oeuvre par le moyen de communication 1, consistant essentiellement à rendre compte 104 de ce que reçoit sans fil ledit moyen,
la mise en oeuvre de l'étape consistant à rendre compte 104 étant fonction de la réception sans fil par le moyen de communication 1, à savoir la réception ou non d'un signal, voire des informations que contient un signal reçu. Ainsi, la façon qu'a le moyen de communication 1 de rendre compte 104 est au moins différente entre le cas où il ne reçoit aucun signal et le cas où il reçoit un signal, voire différente selon le signal reçu.

Il convient tout d'abord de noter que le moyen de communication 1 rend aussi compte 104 de la non réception d'un signal pendant que le procédé est mis en oeuvre. La façon correspondante peut par exemple consister à ne faire fonctionner aucun des moyens de signalisation, ou à les faire fonctionner d'une certaine façon, par exemple une diode allumée en rouge, un son à fréquence particulière ou à intermittence particulière.

Comme il sera décrit encore plus loin, un signal sans fil sous la forme d'une balise de test 4 est normalement envoyé par un moyen d'émission 2, et le procédé vise ainsi à vérifier que le moyen de communication 1 reçoit effectivement cette balise de test 4. Dans le cadre du procédé de test 100, il est donc important de rendre compte 104 de l'absence de réception de signal, ce qui signifie déjà que la communication ne se fait pas correctement, ce qui peut provenir de la position du moyen de communication 1 dans un environnement très peu perméable aux ondes, ou aussi une détérioration de l'appareil. La mise en oeuvre du compte rendu 104 est donc aussi adaptée à l'absence de signal. Dans un cas simple, il peut suffire de ne pas commander le fonctionnement du moyen de signalisation, buzzer, émetteur, diode, ou autre.

Cela signifie donc que la façon avec laquelle le moyen de communication 1 rend compte 104 du signal reçu dépend au moins de la réception ou non d'un signal, voire dépend des informations contenues dans un signal effectivement reçu.

Ainsi, selon une caractéristique additionnelle possible du procédé, il comprend une étape, mise en oeuvre par le moyen de communication 1, consistant essentiellement, en cas de réception sans fil d'un signal par ledit moyen, à analyser 103 ledit signal pour en identifier des informations qu'il contient,
la mise en oeuvre de l'étape consistant à rendre compte 104 étant fonction des informations identifiées lors de son analyse 103.

Le moyen de communication 1 rend alors compte 104 en fonction des informations contenues dans le signal qu'il reçoit, le cas échéant. Le compte rendu 104 se fait donc en fonction des résultats de l'analyse 103, des différences dans les informations extraites de l'analyse 103 menant à des différences dans la façon de rendre compte 104.

Dans le cas où un signal est effectivement reçu, le moyen de communication 1 l'analyse 103 pour en extraire les informations qu'il contient, et adapter en conséquence sa façon de rendre compte 104. Les informations possibles codées dans la balise de test 4 émise 102 sont décrites plus bas. Le compte rendu 104 est modulé en fonction des informations contenues dans le signal reçu, en particulier dans la balise de test 4, et bien entendu en tenant compte de la nature des moyens mis en oeuvre pour rendre compte 104 : envoi de différents signaux d'acquittement, avec ou sans fil, modification de la couleur de l'affichage, changement de l'allumage des diodes, de leur fréquence de clignotement, etc.

Comme il sera encore décrit plus loin, la mise en oeuvre du procédé de test 100 par le moyen de communication 1 est seulement temporaire. Pendant toute la durée du procédé de test 100, le moyen d'émission 2 émet 102 une balise de test 4, et le moyen de communication 1 adapte la façon de rendre compte 104 à la non réception de signal ou aux informations que contient le signal reçu, en particulier la balise de test 4 ou un autre signal.

Il peut bien sûr être prévu que, même en cas de réception récurrente d'une même balise de test 4 émise plusieurs fois d'affilée lors du procédé, la façon de rendre compte 104 reste la même. Par exemple, dès la réception d'une balise de test 4 qui lui est destinée, la mise en oeuvre du compte rendu 104 est adaptée puis conservée dans cet état, même si d'autres balises de test 4 ne sont plus reçues, ou si d'autres balises de test 4 similaires sont encore reçues à intervalles réguliers, correspondant évidemment à l'intervalle avec lequel le moyen d'émission 2 émet lesdites balises de test 4.

Des priorités peuvent être aménagées entre les façons de rendre compte 104. Ainsi, si le moyen de communication 1 ne reçoit aucun signal au début du procédé de test 100, le compte rendu 104 en sera représentatif. Si, en particulier compte tenu d'un déplacement, en cours de procédé, du moyen de communication 1 et/ ou du moyen d'émission 2, le moyen de communication 1 reçoit ultérieurement une balise de test 4, le compte rendu 104 peut être ajusté. Toutefois, si le moyen de communication 1 reçoit une balise de test 4 qui lui est destinée et rend compte 104 de façon adaptée, il pourra ne pas être tenu compte de la réception ultérieure de signaux qui ne sont pas des balises de test 4 à son attention.

Selon une caractéristique additionnelle possible, rendre compte 104 est réalisé au niveau du moyen de communication 1 lui-même et d'une façon directement perceptible par une personne alors à proximité du moyen de communication 1, en particulier en pilotant un moyen d'indication lumineuse 3, voir figure 2, que comprend le moyen de communication 1, tel qu'une diode luminescente, par exemple. Moduler le compte rendu 104 en fonction des informations codées par le signal reçu et détectées lors de l'analyse 103 se fait donc en modulant la signalisation visuelle ou acoustique qu'une personne peut discerner à proximité du moyen de communication 1, à savoir à portée de regard ou d'ouïe.

Selon une autre caractéristique additionnelle possible, l'analyse 103 d'un signal reçu par le moyen de communication 1 comprend la détection de son type, à savoir par exemple un signal de type test ou de type commande,
la mise en oeuvre de l'étape consistant à rendre compte 104 étant fonction du type de signal reçu, identifié lors de son analyse 103. Le procédé de test 100 requiert l'émission 102 d'un signal par un moyen d'émission 2 qui émet un signal particulier dont il convient de tester et de vérifier la réception par le moyen de communication 1. Ces deux appareils sont normalement destinés, en cours d'utilisation et pour leur fonctionnement normal, à échanger sans fil des informations, en particulier des instructions ou des mesures, même lors de l'exécution du procédé de test 100. Il est donc avantageux de traiter différemment, d'une part, le signal émis par le moyen d'émission 2 pendant le procédé de test 100 et normalement échangé pendant l'utilisation, relatif au fonctionnement normal, et, d'autre part, le signal émis par le moyen d'émission 2 pendant le procédé de test 100 et qui est destiné à vérifier la qualité de la communication entre eux. Pour faire cette distinction, il est ainsi proposé que la balise de test 4, émise par le moyen d'émission 2 pour tester la communication, contienne une information représentative de son type, à savoir un type correspondant à la finalité dudit signal, c'est-à-dire ici le test de la communication. Selon le type de signal reçu, le moyen de communication 1 pourra donc soit l'analyser 103 de sorte à en extraire les informations qui lui permettront de moduler le compte rendu 104, ou de le traiter comme un signal véhiculé normalement en fonctionnement, signal de mesure, instruction, ou autres. Si le type de signal reçu n'est pas celui d'un test de fonctionnement, l'étape d'analyse 103 pourra ne pas être exécutée, puisqu'il n'est alors pas nécessaire d'identifier des informations à utiliser pour moduler la façon de rendre compte 104.

Selon une caractéristique additionnelle possible, l'analyse 103 d'un signal reçu par le moyen de communication 1 comprend la détection d'un identifiant de source dudit signal, à savoir un identifiant de son émetteur initial,
la mise en oeuvre de l'étape consistant à rendre compte 104 étant fonction de l'identifiant de source du signal reçu, détecté lors de son analyse 103, en particulier fonction de l'appartenance de la source du signal à un ensemble de sources avec lesquelles le moyen de communication 1 est configuré pour communiquer.

Il est courant que les signaux échangés dans un réseau domotique, avec ou sans fil, codent aussi une information représentative de leur source, en particulier pour que le destinataire puisse retourner un message d'acquittement. Il est donc proposé ici, lors de l'analyse 103, d'identifier l'émetteur du signal reçu par le moyen de communication 2, et d'en tenir compte pour la façon de réaliser le compte rendu 104. Comme il sera encore décrit plus loin, le moyen de communication 2 est normalement paramétré et configuré pour échanger des signaux avec différents autres appareils de l'installation domotique à laquelle il appartient. Si l'émetteur du signal reçu et analysé 103 est bien un appareil avec lequel le moyen de communication 2 est supposé communiquer, le compte rendu 104 sera différent de si l'émetteur n'est pas reconnu.

En outre, lors de la mise en oeuvre du procédé de test 100, en particulier lors de l'étape d'initialisation 101 décrite plus loin, il est possible de spécifier au moyen de communication 1 l'identité du moyen d'émission 2 dont on teste la réception des signaux. Dans ce cas, le moyen de communication 1 pourra comparer, d'une part, l'identité de l'émetteur attendu dans le cadre d'un procédé de test 100 particulier, et, d'autre part, l'identité de la source du signal qu'il a reçu.

Grâce à cette caractéristique, le moyen de communication 1 ne tient pas nécessairement compte du fait que la balise de test 4 ne lui est éventuellement pas destinée pour moduler la mise en oeuvre du compte rendu 104. Il est ainsi possible de faire fonctionner le procédé de test 100 selon le principe du broadcast, c'est-à-dire en utilisant un seul moyen d'émission 2 et plusieurs moyens de réception 1 simultanément, chacun étant sensible à la balise de test 4 émise par le moyen d'émission 2, sans qu'aucune notion de destinataire soit prise en compte pour la modulation du compte rendu 104. La balise de test 4 émise n'est pas spécifique à un destinataire, et sa réception par un moyen de communication 1 est considérée comme suffisante.

Alternativement, comme décrit ci-dessous, le destinataire de la balise de test 4 peut être spécifié, et, dans ce cas, la seule réception de la balise de test 4 n'est pas suffisante, et le moyen de communication 1 doit tenir compte du fait qu'il est ou non le destinataire envisagé de la balise de test 4. Ainsi, selon une autre caractéristique additionnelle possible, l'analyse 103 d'un signal reçu par le moyen de communication 1 comprend la détection d'un identifiant de destinataire dudit signal,
la mise en oeuvre de l'étape consistant à rendre compte 104 étant fonction de l'identifiant de destinataire du signal reçu, détecté lors de son analyse 103, en particulier fonction du fait que le moyen de communication 1 est bien le destinataire prédéfini. Il est ainsi possible de tester un canal de communication particulier entre, d'une part, un moyen d'émission 2 spécifique, et, d'autre part, un moyen de communication 1 spécifique. La prise en compte d'un identifiant du destinataire du signal par le moyen de communication 1 lors de l'analyse 103 permet de se différencier d'un test de communication en broadcast, évoqué ci-dessus.

Ainsi, le compte rendu 104 sera différent si le moyen de communication 1 est bien le destinataire du message qu'il reçoit, d'un cas où le signal est destiné à un autre appareil, même au sein du même réseau domotique.

Selon une autre caractéristique additionnelle possible du procédé, il comprend une étape, mise en oeuvre par le moyen de communication 1, et consistant essentiellement à évaluer la puissance d'un signal reçu. Préférentiellement, seul un signal dont la puissance est au-dessus d'un premier seuil est analysé 103, la mise en oeuvre de l'étape consistant à rendre compte 104 étant dans le cas contraire la même que celle correspondant à l'absence de réception de signal. Cela permet d'éviter que l'installateur conclue à tort qu'une communication est satisfaisante, alors que le signal arrive à trop faible puissance pour que l'échange d'information ait lieu de façon véritablement fiable.

Avantageusement, et selon une caractéristique additionnelle possible, la mise en oeuvre de l'étape consistant à rendre compte 104 est fonction de la puissance du signal reçu et effectivement analysé 103. Ainsi, la façon de rendre compte 104 sera aussi fonction de la puissance du signal que reçoit le moyen de communication 1. Si la puissance du signal contenant la balise de test 4 est trop faible, la façon de rendre compte 104 sera adaptée. Comme il sera décrit plus loin, en cas de puissance trop faible, on peut envisager un signal intermittent, visuel ou acoustique, alors que le signal est continu si la puissance est suffisante.

Comme il a déjà été évoqué, le procédé de test 100 nécessite une étape d'émission 102, bien que la gestion du compte rendu 104 peut, dans la pratique, se faire même si l'émission 102 n'est pas contrôlée, puisque le compte rendu 104 peut tenir compte d'un signal qui n'a pas été émis dans le cadre du procédé de test 100. Cela peut par exemple être le cas pour des installations domotiques très simples dans lesquelles le nombre d'émetteur est très faible et les signaux sont très fréquemment envoyés. Dans ce cas, il suffit de faire fonctionner le moyen de communication 1 pour vérifier, sur la base de la façon qu'il a de rendre compte 104, qu'il est bien capable de recevoir les signaux qui lui sont destinés.

Ainsi, selon une caractéristique additionnelle possible, le procédé comprend une étape consistant à émettre 102, par transmission sans fil à l'aide d'un moyen d'émission 2, une balise de test 4, de sorte à tester la communication sans fil entre ledit moyen d'émission 2 et le moyen de communication 1. La balise de test 4 peut en particulier contenir des informations représentatives de son type, à savoir de son type test, et/ou de son émetteur, à savoir le moyen d'émission 2 lui-même, et/ou de son destinataire, à savoir le moyen de communication 1 lui-même. Préférentiellement, le moyen d'émission 2 et le moyen de communication 1 sont configurés pour communiquer, et ce lors d'une étape préliminaire consistant à définir, pour chaque borne de l'installation domotique, et donc en particulier pour le moyen de communication 1 et le moyen d'émission 2, les autres bornes de l'installation avec lesquelles il peut échanger de l'information.

Selon une autre caractéristique additionnelle possible, le procédé comprend une étape d'initialisation 101, consistant, d'une part, à commander au moyen de communication 1 l'exécution de l'étape de compte rendu 104, et éventuellement, d'autre part, à commander l'émission 102 au moyen d'émission 2, cette étape d'initialisation 101 étant notamment réalisée par l'appui sur un bouton dont l'un ou/et l'autre est pourvu/sont pourvus, par réception d'une instruction, communiquée avec ou sans fil, la commande de compte rendu 104 pouvant en outre être générée par le moyen d'émission 2 lui-même.

Ainsi, sans initialisation 101, le moyen de communication 1 fonctionne uniquement comme il est amené à le faire en utilisation. Les moyens d'indication dont il est pourvu ne sont alors préférentiellement pas utilisés, ce qui signifie que le compte rendu 104 n'est préférentiellement pas effectué. Après l'étape d'initialisation 101, le moyen de communication 1 pilote le compte rendu 104 comme décrit ci-dessus, et ce préférentiellement pendant toute une durée prédéfinie.

En ce qui concerne le moyen d'émission 2 éventuellement piloté aussi conformément au procédé de test 100, l'étape d'initialisation 101 a pour effet que celui-ci se mettra à émettre 102 une balise de test 4, et ce préférentiellement pendant toute la durée du procédé de test 100, jusqu'à la fin d'une temporisation ou une action d'extinction, comme un message sans fil issu d'un outil, par exemple.

Ainsi, l'étape d'initialisation 101 a pour effet de mettre en marche le procédé de test 100, et donc de faire passer le moyen de communication, 1, voire le moyen d'émission 2, dans un mode de test, qui vient conditionner la façon avec laquelle le moyen de communication 1 pilote les moyens d'indication dont il est muni pour rendre compte 104, voir aussi conditionner la façon avec laquelle le moyen d'émission 1 émet des signaux. Ce mode de test peut être utilisé simultanément au mode de fonctionnement normal, ou empêcher ce dernier.

De plus, selon une autre caractéristique additionnelle possible, l'étape d'émission 102, ainsi que, éventuellement, l'étape de compte rendu 104, est stoppée / sont stoppées à la fin d'une temporisation lancée par l'étape d'initialisation 101, l'avantage d'une instruction de fin avant l'extinction de la temporisation étant toutefois d'éviter que le moyen de communication 1 rende compte de la réception du signal envoyé par un moyen d'émission 2 encore en mode test, simultanément à un autre dont il ne reçoit pas le signal.

L'invention a aussi pour objet un dispositif de communication sans fil, comprenant au moins un moyen de communication 1 apte à recevoir un signal sans fil et à rendre compte 104 de ce qu'il reçoit, pour la mise en oeuvre d'un procédé tel que décrit ci-dessus. Le moyen de communication 1 comprend donc au moins des moyens d'indication, afin de rendre compte 104, de façon visuelle et/ou acoustique, préférentiellement d'une façon perceptible par un installateur se situant à proximité.

Selon une caractéristique additionnelle possible, le dispositif de communication comprend, en outre, au moins un moyen d'émission 2, apte à émettre un signal sans fil, pour la mise en oeuvre d'un procédé tel que décrit ci-dessus et qui comprend, en outre, au moins une étape d'émission 102.

Dans le cas où l'instruction d'initialisation 101 ne se fait pas par signal sans fil, le moyen de communication 1, voire aussi le moyen d'émission 2, comporte alors avantageusement un élément de contrôle, grâce à l'actionnement duquel l'étape d'initialisation 101 peut être mise en oeuvre et tout le procédé de test 100 par conséquent.

Le procédé tel que décrit ci-dessus est ainsi mis en oeuvre lorsqu'un installateur souhaite vérifier la communication dans une installation domotique communiquant sans fil, entre un moyen d'émission 2 et un moyen de communication 1. Le moyen de communication 1 est au moins apte à recevoir, voire aussi apte à émettre, le moyen d'émission 2 étant, quant à lui, au moins apte à émettre, voir aussi apte à recevoir. Le moyen d'émission 2 peut fonctionner par piles.

L'installateur configure au préalable, avant de réaliser le procédé de test 100, l'ensemble des moyens de communication 1 et des moyens d'émission 2 de l'installation domotique, en particulier en définissant pour chacun d'eux l'ensemble des équipements avec lesquels il peut échanger des informations, surtout échanger sans fil des informations.

Après cette étape de configuration, chaque moyen de communication 1 mémorise donc le au moins un moyen d'émission 2 duquel il peut recevoir un signal, et chaque moyen d'émission 2 mémorise le au moins un moyen de communication 1 auquel il peut envoyer un signal, et éventuellement aussi duquel il peut recevoir des signaux d'acquittement. Le moyen de communication 1 ne traitera donc normalement que les signaux reçus par des moyens d'émission 2 avec lesquels il est configuré pour communiquer.

Après cette étape de configuration préalable, l'installateur doit ensuite tester la capacité à communiquer d'un moyen d'émission 2 et d'un moyen de communication 1 qui seront amenés à échanger un signal. Ce test se fait donc en mettant en oeuvre le procédé de test 100 selon l'invention, préférentiellement pour chaque paire contenant un moyen d'émission 2 et un moyen de communication 1.

L'installateur initialise 101 donc le procédé de test 100, ce qui peut se faire en appuyant sur un bouton dont le moyen d'émission 2 ou / et le moyen de communication 1 est muni / sont munis, ou encore par réception d'une instruction, préférentiellement sans fil. Une telle instruction reçue sans fil peut par exemple être émise par une télécommande ou autre appareil équivalent, qu'utilise l'installateur pour réaliser le test, et qu'il positionne à portée du moyen d'émission 2 puis du moyen de communication 1. Une instruction d'initialisation 101 peut aussi être reçue avec ou sans fil de la part d'une centrale de commande de l'installation domotique à laquelle appartiennent le moyen d'émission 2 et le moyen de communication 1. L'étape d'initialisation 101 permet donc de faire débuter les étapes de traitement qui se déroulent lors du procédé de test 100, à savoir essentiellement les étapes d'analyse 103 et de compte rendu 104.

Ainsi, le moyen d'émission 2, une fois qu'il a reçu l'instruction d'initialisation 101, va émettre 102 sans fil une balise de test 4, et ce préférentiellement pendant une certaine durée, ou jusqu'à ce qu'il reçoive une instruction de fin de procédé de test 100, auquel cas cette émission 102 cessera. La balise de test 4 consiste essentiellement en un message qu'émet sans fil le moyen d'émission 2, et qui code certaines informations, listées plus bas.

L'émission 102 de la balise de test 4 peut se faire à fréquence régulière, par exemple chaque seconde, et ce pendant plusieurs minutes, jusqu'à la fin d'une temporisation. Pendant tout le procédé de test 100, le moyen d'émission 2 reste capable d'envoyer des instructions ou autres informations, qui ne sont pas liées au procédé de test 100 lui-même mais par exemple liées au fonctionnement même de l'installation domotique.

En ce qui concerne le moyen de communication 1, la réception de l'instruction d'initialisation 101 a pour effet de lancer l'étape consistant à rendre compte 104, sur la base de la réception sans fil que réalise le moyen de communication 1. Ainsi, pendant tout le temps du procédé de test 100, le moyen de communication 1 rendra compte 104, soit de l'absence totale de réception de signal sans fil, soit, en cas de réception de signal, qui peut être une balise de test 4 ou non, d'une façon qui tient compte des informations contenues dans ledit signal et détectées par l'analyse 103.

Là encore, le moyen de communication 1 rend compte 104 pendant tout le temps de la durée du procédé de test 100, c'est-à-dire à partir de l'initialisation 101 jusqu'à la fin du procédé, généralement à l'extinction d'une temporisation. Pendant ce temps, le moyen de communication 1 reste avantageusement capable de traiter les signaux qu'il reçoit et qui n'interviennent pas pour le test, en particulier des signaux de commande reçus éventuellement sans fil, et selon lesquels, par exemple, l'actionneur auquel il est associé doit effectuer une certaine opération.

Ainsi, pendant le procédé de test 100, le moyen de communication 1 et le moyen d'émission 2 peuvent assurer les fonctions qu'ils remplissent en situation d'utilisation. Dans l'absolu, alternativement, il est tout à fait possible de rendre tant le moyen d'émission 2 que le moyen de communication 1 totalement dédiés au procédé de test 100 pendant qu'il se déroule, les rendant alors inaptes à toute autre opération ne servant pas à tester la communication entre eux.

Le moyen d'émission 2 émet donc une balise de test 4, qui est un signal, véhiculé sans fil, et qui code une ou plusieurs des informations suivantes :
- le type de la balise de test 4, à savoir un type correspondant non pas, par exemple, à une instruction, un acquittement, une répétition d'information, une information d'état d'un capteur, ou autres, mais bien à un signal ayant pour but de tester une possibilité de communiquer sans fil, ou de façon générale, un type correspondant à un test ;
- l'identité de l'émetteur de la balise de test 4, qui correspond, ici au moyen d'émission 2 dont on souhaite évaluer la possibilité de recevoir les signaux qu'il émet ;
- l'identité du destinataire de la balise de test 4, ce qui correspond, dans le cas où c'est une communication entre le moyen d'émission 2 et uniquement le moyen de communication 1 qui est testée, à l'identité du moyen de communication 1 spécifique lui-même.

Lors de la mise en oeuvre du procédé de test 100, il se peut que le moyen de communication 1 capte des signaux sans fil émis par des sources avec lesquels il est configuré pour travailler dans l'installation domotique, alors qu'il ne reçoit pas la balise de test 4 envoyée par le moyen d'émission 2 dont on souhaite vérifier la réception des signaux.

Les signaux que reçoit le moyen de communication 1 peuvent être d'un autre type que celui d'un test de portée : information sur l'état d'une mesure, instruction de commande, répétition de signal, paramétrage, ou autre. Il est donc important d'éviter alors un comportement erroné de la part du moyen de communication 1 en ce qui concerne le compte rendu 104 : la réception d'un signal, éventuellement à sa destination, et/ou provenant d'une source avec laquelle il est configuré pour échanger des signaux, mais qui n'est pas du type correspondant à un test de communication, ne doit pas être confondue avec la réception du signal émis dans le but de tester la communication. Ce genre d'erreurs est évité en codant, dans la balise de test 4, une information propre à son type, et en tenant compte de cette information lors de l'étape de compte rendu 104.

L'information du destinataire du signal peut aussi être codée dans la balise de test 4, ce qui permet de cibler un récepteur de l'installation domotique en particulier pour vérifier la possibilité de communiquer entre lui, en tant que moyen de communication 1, et le moyen d'émission 2. En l'absence de cette information, il reste toutefois possible d'aménager un procédé de test 100 fonctionnant avec le principe du broadcast, dans lequel aucun destinataire n'est spécifié. Dans ce cas, tout moyen de communication 1, s'il reçoit une balise de test 4 qui est émise par un moyen d'émission 2 avec lequel il est configuré pour travailler, voire qui est de type à tester la communication, se comportera de la même façon, ce qui permet en particulier de tester simultanément la communication entre un moyen d'émission 2 et plusieurs moyens de communication 1.

Un des intérêts de coder, dans la balise de test 4, l'identité du destinataire est que l'étape de compte rendu 104 pourra tenir compte de ce que le moyen de communication 1 est ou non le destinataire de ladite balise de test 4. Ce qui signifie qu'il sera possible de détecter les perturbations provoquées dans l'installation domotique par l'envoi d'un signal à un moyen de communication 1 particulier.

Afin de rendre compte 104 de la réception qu'effectue le moyen de communication 1, ce dernier peut envoyer, avec ou sans fil, un message à destination d'une centrale domotique, ou encore à destination du moyen d'émission 2 lui-même, ou peut aussi piloter un moyen d'indication acoustique ou visuelle dont il est muni. Dans ce dernier cas, le moyen d'émission 1 est muni d'au moins une diode, préférentiellement de deux. Il est aussi possible, notamment afin de réduire l'encombrement, d'avoir recours à des diodes bicolores, dont l'illumination simultanée des deux teintes en crée une troisième.

Afin de fournir un maximum d'information à l'installateur qui effectue le test, la mise en oeuvre de l'étape consistant à rendre compte 104 tient tout d'abord compte de la réception d'un quelconque signal pendant le procédé de test 100 ou, alternativement, de l'absence totale de réception d'un signal. Comme il sera précisé plus loin, un signal de trop faible puissance est avantageusement considéré comme non reçu. Par exemple, si le moyen de communication 1 ne reçoit aucun signal pendant le procédé de test 100, les diodes restent éteintes. Il peut aussi être prévu qu'une des diodes, par exemple une diode de couleur rouge, reste allumée tant qu'elle ne reçoit aucun signal.

En cas de réception d'un signal, il est analysé 103 par le moyen de communication 1 et la mise en oeuvre de l'étape consistant à rendre compte 104 se fait en pilotant le moyen d'indication en fonction des informations codées par le signal reçu, ce dernier pouvant être une balise de test 4 ou tout autre signal :
- si le signal est bien du type test, émis par un moyen d'émission 2 avec lequel le moyen de communication 1 est configuré pour travailler, à destination spécifique du moyen de communication 1, alors la diode s'allumera, par exemple une diode verte ;
- si le signal est bien du type test, émis par un moyen d'émission 2 avec lequel le moyen de communication 1 est configuré pour travailler, mais pas à destination du moyen de communication 1, alors une autre diode pourra être allumée, par exemple une diode rouge ou orange ;
- si le signal n'est pas du type test, et/ou pas émis par un émetteur avec lequel le moyen de communication 1 est configuré pour communiquer, alors il n'est pas nécessaire d'en tenir compte pour le compte rendu 104 et toutes les diodes peuvent rester éteintes, ou seule la diode associée à l'absence de réception peut rester allumée. Alternativement, rendre compte 104 peut consister alors à allumer une diode spécifique, pour montrer que le moyen de communication 1 reçoit de nombreux autres signaux et non ceux du moyen d'émission 2, ce qui pourra donc provoquer des perturbations.

Si aucun signal n'est reçu pendant le procédé de test 100, l'indication visuelle sera pilotée d'une première façon, en particulier elle sera laissée éteinte. Dans le cas où le moyen de communication 1 reçoit un signal de trop faible puissance, il peut avantageusement considérer qu'aucun signal n'a été reçu.

Enfin, comme le moyen de communication 1 est avantageusement apte à quantifier la puissance d'un signal qu'il reçoit, il est possible de tenir compte de la puissance du signal reçu pour moduler la mise en oeuvre de l'étape consistant à rendre compte 104. Ainsi, par exemple, le compte rendu 104 peut tenir compte de la puissance du signal, par exemple en passant d'un éclairement continu de la diode à un éclairement par intermittence, éventuellement dont la fréquence est adaptée à la puissance du signal.

L'installateur souhaitant évaluer la qualité de la communication entre un moyen d'émission 2 et un moyen de communication 1 a dont la possibilité de relever, notamment visuellement, directement au niveau du moyen de communication 1 lui-même, s'il a reçu le signal émis par le moyen d'émission 2, éventuellement avec quelle puissance. Le moyen de communication 1 peut aussi signaler visuellement qu'il n'a pas reçu de signal, ou qu'il en a reçu qui pourraient perturber la communication entre le moyen de communication 1 et le moyen d'émission 2. Dans l'absolu, si le moyen de communication 1 comprend deux diodes, l'une d'elle peut être associée aux signaux de tests reçus par le moyen de communication 1, éventuellement à sa destination spécifique, l'autre pouvant être associée aux autres signaux risquant de perturber la communication : signaux émis par des émetteurs avec lesquels le moyen de communication 1 n'a pas été paramétré pour travailler, autres émetteurs et/ou autres signaux éventuellement simultanés, etc.

Il suffit ensuite à l'installateur de déplacer le moyen de communication 1, et/ou le moyen d'émission 2 jusqu'à obtenir une communication de qualité suffisante entre eux, et/ou un risque de perturbation réduit. Dans ce cas, l'avantage d'un fonctionnement en broadcast, où la balise de test 4 est traitée simultanément et de la même manière par tous les moyens de réception 1, est que l'installateur sait à tout moment et simultanément la capacité de communiquer entre un moyen d'émission 2 et plusieurs moyens de réception 1.

Bien entendu, l'invention n'est pas limitée au mode de réalisation décrit et représenté aux dessins annexés. Des modifications restent possibles, notamment du point de vue de la constitution des divers éléments, par combinaison différente de tout ou partie des caractéristiques détaillées ci-dessus, ou par substitution d'équivalents techniques, sans sortir pour autant du domaine de protection de l'invention.

## Revendications

1. Procédé de test (100) de la réception sans fil d'un moyen de communication (1), ledit moyen étant au moins apte à recevoir sans fil un signal,
le procédé comprenant une étape, mise en oeuvre par le moyen de communication (1), consistant essentiellement à rendre compte (104) de ce que reçoit sans fil ledit moyen,
la mise en oeuvre de l'étape consistant à rendre compte (104) étant fonction de la réception sans fil par le moyen de communication (1), à savoir la réception ou non d'un signal, voire des informations que contient un signal reçu, comprenant en outre l'étape suivante :
l'analyse (103) d'un signal reçu par le moyen de communication (1) comprend la détection de son type, à savoir un signal de type test, de sorte à, selon le type de signal reçu, soit en extraire les informations qui permettent au moyen de communication (1) de moduler le compte rendu, soit de traiter le signal reçu comme un signal vehiculé normalement en fonctionnement, c'est-à-dire un signal de mesure, d'instructions ou autres,
la mise en oeuvre de l'étape consistant à rendre compte (104) étant fonction du type de signal reçu, identifié lors de son analyse (103).

2. Procédé de test (100) selon la revendication 1, **caractérisé en ce que**
il comprend une étape, mise en oeuvre par le moyen de communication (1), consistant essentiellement, en cas de réception sans fil d'un signal par ledit moyen, à analyser (103) ledit signal pour en identifier des informations qu'il contient,
la mise en oeuvre de l'étape consistant à rendre compte (104) étant fonction des informations identifiées lors de son analyse (103).

3. Procédé de test (100) selon l'une quelconque des revendications 1 ou 2, **caractérisé en ce que**
rendre compte (104) est réalisé au niveau du moyen de communication (1) lui-même et d'une façon directement perceptible par une personne alors à proximité du moyen de communication (1) et le procédé comprend moduler le compte rendu (104) en fonction des informations codées par le signal reçu et détectées lors de l'analyse (103) en modulant la signalisation visuelle ou accoustique q'une personne peut discerner.

4. Procédé de test (100) selon l'une quelconque des revendications 1 à 3, **caractérisé en ce que**
l'analyse (103) d'un signal reçu par le moyen de communication (1) comprend la détection d'un identifiant de source dudit signal, à savoir un identifiant de son émetteur initial,
la mise en oeuvre de l'étape consistant à rendre compte (104) étant fonction de l'identifiant de source du signal reçu, détecté lors de son analyse (103).

5. Procédé de test (100) selon l'une quelconque des revendications 1 à 4, **caractérisé en ce que**
l'analyse (103) d'un signal reçu par le moyen de communication (1) comprend la détection d'un identifiant de destinataire dudit signal,
la mise en oeuvre de l'étape consistant à rendre compte (104) étant fonction de l'identifiant de destinataire du signal reçu, détecté lors de son analyse (103).

6. Procédé de test (100) selon l'une quelconque des revendications 1 à 5, **caractérisé en ce que**
il comprend une étape, mise en oeuvre par le moyen de communication (1), et consistant essentiellement à évaluer la puissance d'un signal reçu.

7. Procédé de test (100) selon la revendication 6, **caractérisé en ce que**
la mise en oeuvre de l'étape consistant à rendre compte (104) est fonction de la puissance du signal reçu et effectivement analysé (103).

8. Procédé de test (100) selon l'une quelconque des revendications 1 à 7, **caractérisé en ce qu'**il comprend
une étape consistant à émettre (102), par transmission sans fil à l'aide d'un moyen d'émission (2), une balise de test (4), de sorte à tester la communication sans fil entre ledit moyen d'émission (2) et le moyen de communication (1).

9. Procédé de test (100) selon l'une quelconque des revendications 1 à 8, **caractérisé en ce qu'**il comprend
une étape d'initialisation (101), consistant, d'une part, à commander au moyen de communication (1) l'exécution de l'étape de compte rendu (104), et éventuellement, d'autre part, à commander l'émission (102) au moyen d'émission (2).

10. Procédé de test (100) selon la revendication 9, **caractérisé en ce que**
l'étape d'émission (102), ainsi que, éventuellement, l'étape de compte rendu (104), est stoppée / sont stoppées à la fin d'une temporisation lancée par l'étape d'initialisation (101).

11. Dispositif de communication sans fil, comprenant au moins un moyen de communication (1) apte à recevoir un signal sans fil et à rendre compte (104) de ce qu'il reçoit, pour la mise en oeuvre d'un procédé selon l'une quelconque des revendication 1 à 10.

12. Dispositif de communication sans fil selon la revendication 11, **caractérisé en ce qu'**il comprend, en outre, au moins un moyen d'émission (2), apte à émettre un signal sans fil, pour la mise en oeuvre d'un procédé selon l'une quelconque des revendications 8 à 10.

## Patentansprüche

1. Verfahren zum Testen (100) des drahtlosen Empfangs eines Kommunikationsmittels (1), wobei das Mittel mindestens ausgelegt ist, ein Signal drahtlos zu empfangen,
wobei das Verfahren einen Schritt umfasst, der von dem Kommunikationsmittel (1) durchgeführt wird und im Wesentlichen aus dem Abbilden (104) dessen besteht, was das Mittel drahtlos empfängt,
wobei die Durchführung des aus dem Abbilden (104) bestehenden Schritts auf dem drahtlosen Empfang durch das Kommunikationsmittel (1) basiert, nämlich dem Empfang des Signals oder nicht, oder von Informationen, die ein empfangenes Signal umfasst,
ferner umfassend den folgenden Schritt:
Analyse (103) eines von dem Kommunikationsmittel (1) empfangenen Signals, umfassend die Detektion seines Typs, nämlich eines Signals vom Typ Test, um, gemäß dem Typ des empfangenen Signals, entweder die Informationen daraus zu extrahieren, die es dem Kommunikationsmittel (1) ermöglichen, die Abbildung zu modulieren, oder das empfangene Signal als normal im Betrieb übertragenes Signal zu behandeln, das heißt als Mess-, Instruktions- oder sonstiges Signal,
wobei die Durchführung des aus dem Abbilden (104) bestehenden Schritts von dem Typ des empfangenen Signals abhängt, der während dessen Analyse (103) identifiziert wird.

2. Verfahren (100) nach Anspruch 1,
**dadurch gekennzeichnet, dass**
dieses einen Schritt umfasst, der von dem Kommunikationsmittel (1) durchgeführt wird und im Wesentlichen, in dem Fall des drahtlosen Empfangs eines Signals durch das Mittel, aus der Analyse (103) des Signals zur Identifikation von Informationen besteht, die es enthält,
die Durchführung des aus dem Abbilden (104) bestehenden Schritts von Informationen abhängt, die bei dessen Analyse (103) identifiziert werden.

3. Verfahren (100) nach einem der Ansprüche 1 oder 2,
**dadurch gekennzeichnet, dass**
das Abbilden (104) am Kommunikationsmittel (1) selbst und in einer Weise durchgeführt wird, die für eine sich dann in der Nähe des Kommunikationsmittels (1) befindende Person direkt wahrnehmbar ist, und das Verfahren das Modulieren des Erkennens (104) auf der Basis von Informationen umfasst, die von dem empfangenen Signal codiert wurden und bei der Analyse (103) detektiert wurden, indem die visuelle oder akustische Signalisierung moduliert wird, die eine Person wahrnehmen kann.

4. Verfahren (100) nach einem der Ansprüche 1 bis 3,
**dadurch gekennzeichnet, dass**
die Analyse (103) eines von dem Kommunikationsmittel (1) empfangenen Signals die Detektion eines Identifikators der Quelle des Signals umfasst, nämlich eines Identifikators dessen ursprünglichen Senders,
die Durchführung des aus dem Abbilden (104) bestehenden Schritts von dem Identifikator der Quelle des empfangenen Signals abhängt, der bei dessen Analyse (103) detektiert wird.

5. Verfahren (100) nach einem der Ansprüche 1 bis 4,
**dadurch gekennzeichnet, dass**
die Analyse (103) eines von dem Kommunikationsmittel (1) empfangenen Signals die Detektion eines Identifikators des Ziels des Signals umfasst,
die Durchführung des aus dem Abbilden (104) bestehenden Schritts von dem Identifikator des Ziels des empfangenen Signals abhängt, der bei seiner Analyse (103) detektiert wird.

6. Verfahren (100) nach einem der Ansprüche 1 bis 5,
**dadurch gekennzeichnet, dass**
dieses einen Schritt umfasst, der von dem Kommunikationsmittel (1) durchgeführt wird und im Wesentlichen aus dem Evaluieren der Leistung eines empfangenen Signals besteht.

7. Verfahren (100) nach Anspruch 6,
**dadurch gekennzeichnet, dass**
die Durchführung des aus dem Abbilden (104) bestehenden Schritts auf der Leistung des empfangenen und effektiv analysierten (103) Signals basiert.

8. Verfahren (100) nach einem der Ansprüche 1 bis 7,
**dadurch gekennzeichnet, dass** dieses umfasst:
einen Schritt, der aus dem Senden (102), durch drahtlose Transmission mit Hilfe eines Sendemittels (2), eines Test-Tags (4) besteht, um die drahtlose Kommunikation zwischen dem Sendemittel (2) und dem Kommunikationsmittel (1) zu testen.

9. Verfahren (100) nach einem der Ansprüche 1 bis 8,
**dadurch gekennzeichnet, dass** dieses umfasst:
einen Schritt der Initialisierung (101), der einerseits aus dem Befehl an das Kommunikationsmittel (1) zur Ausführung des Schritts des Abbildens (104) und gegebenenfalls andererseits aus dem Befehl an das Sendemittel (2) zum Senden (102) besteht.

10. Verfahren (100) nach Anspruch 9,
**dadurch gekennzeichnet, dass**
der Schritt des Sendens (102) sowie gegebenenfalls der Schritt des Abbildens (104) am Ende einer von dem Initialisierungsschritt (101) bewirkten Verzögerung gestoppt wird/gestoppt werden.

11. Vorrichtung zur drahtlosen Kommunikation, umfassend mindestens ein Kommunikationsmittel (1), das ausgelegt ist, ein drahtloses Signal zu empfangen und das abzubilden (104), was es empfängt, zur Durchführung eines Verfahrens nach einem der Ansprüche 1 bis 10.

12. Vorrichtung zur drahtlosen Kommunikation nach Anspruch 11,
**dadurch gekennzeichnet, dass** diese ferner mindestens ein Sendemittel (2) umfasst, das ausgelegt ist, ein drahtloses Signal zu senden, zur Durchführung eines Verfahrens nach einem der Ansprüche 8 bis 10.

## Claims

1. Method for testing (100) the wireless reception of a means of communication (1), said means at least being able to receive a signal wirelessly,
the method comprising a step, implemented by the means of communication (1), essentially consisting in providing feedback (104) on what said means receives wirelessly,
the implementation of the step consisting in providing feedback (104) depending on wireless reception by the means of communication (1), namely reception or not of a signal or even of data that a received signal contains,
furthermore comprising the following step:
the analysis (103) of a signal received by the means of communication (1) comprises detecting its type, namely whether it is a test signal, so that, depending on the type of signal received, either data that allow the means of communication (1) to modulate the feedback are extracted therefrom, or the received signal is treated as a signal normally conveyed in operation, i.e. a measuring signal, a signal containing instructions, etc.
the implementation of the step consisting in providing feedback (104) depending on the type of signal received, which is identified during its analysis (103).

2. Test method (100) according to Claim 1, **characterised in that**
it comprises a step, implemented by the means of communication (1), essentially consisting, in case of wireless reception of a signal by said means, in analysing (103) said signal to identify therefrom data that it contains,
the implementation of the step consisting in providing feedback (104) depending on the data identified during its analysis (103).

3. Test method (100) according to either one of Claims 1 and 2, **characterised in that**
feedback (104) is provided at the means of communication (1) itself and in a way directly perceivable by a person then in proximity to the means of communication (1) and the method comprises modulating the feedback (104) depending on data encoded in the received signal and detected during the analysis (103) by modulating the visual or acoustic signal that a person is able to perceive.

4. Test method (100) according to any one of Claims 1 to 3, **characterised in that**
the analysis (103) of a signal received by the means of communication (1) comprises detecting an identifier of the source of said signal, namely an identifier of its initial emitter,
the implementation of the step consisting in providing feedback (104) depending on the identifier of the source of the received signal, which is detected during its analysis (103).

5. Test method (100) according to any one of Claims 1 to 4, **characterised in that**
the analysis (103) of a signal received by the means of communication (1) comprises detecting an identifier of the intended recipient of said signal,
the implementation of the step consisting in providing feedback (104) depending on the identifier of the intended recipient of the received signal, which is detected during its analysis (103).

6. Test method (100) according to any one of Claims 1 to 5, **characterised in that**
it comprises a step, implemented by the means of communication (1), and essentially consisting in evaluating the power of a received signal.

7. Test method (100) according to Claim 6, **characterised in that**
the implementation of the step consisting in providing feedback (104) depends on the power of the signal received and actually analysed (103).

8. Test method (100) according to any one of Claims 1 to 7, **characterised in that** it comprises
a step consisting in emitting (102), by wireless transmission using an emitting means (2), a test beacon frame (4), so as to test the wireless communication between said emitting means (2) and the means of communication (1).

9. Test method (100) according to any one of Claims 1 to 8, **characterised in that** it comprises
an initialisation step (101), consisting, on the one hand, in commanding the means of communication (1) to execute the step of reporting (104), and optionally, on the other hand, in commanding the emitting means (2) to emit (102).

10. Test method (100) according to Claim 9, **characterised in that**
the emitting step (102), and, optionally, the step of reporting (104), is stopped/are stopped at the end of a delay initiated by the initialisation step (101).

11. Wireless communication device, comprising at least one means of communication (1) able to receive a wireless signal and to provide feedback (104) on what it receives, for implementing a method according to any one of Claims 1 to 10.

12. Wireless communication device according to Claim 11, **characterised in that** it furthermore comprises at least one emitting means (2) able to emit a wireless signal, for implementing a method according to any one of Claims 8 to 10.
